## Europäisches Patentamt

## European Patent Office

## Office européen des brevets

(19)

(11) Veröffentlichungsnummer: **0 211 877**

**B1**

(12)

# EUROPÄISCHE PATENTSCHRIFT

(45) Veröffentlichungstag der Patentschrift:
04.10.89

(21) Anmeldenummer: 86901072.8

(22) Anmeldetag: 04.02.86

(86) Internationale Anmeldenummer:
PCT/EP 86/00058

(87) Internationale Veröffentlichungsnummer:
WO 86/04641 (14.08.86 Gazette 86/18)

(51) Int. Cl.⁴: **F 01 N 9/00**, F 01 N 3/02

(54) **VERFAHREN ZUR AUTOMATISCHEN REGENERATION EINES RUSSFILTERS BEI EINEM PERSONENKRAFTWAGEN MIT DIESELMOTOR.**

(30) Priorität: 09.02.85 DE 3504461

(43) Veröffentlichungstag der Anmeldung:
04.03.87 Patentblatt 87/10

(45) Bekanntmachung des Hinweises auf die Patenterteilung:
04.10.89 Patentblatt 89/40

(84) Benannte Vertragsstaaten:
AT BE CH DE FR GB IT LI LU NL SE

(56) Entgegenhaltungen:
EP-A-0 010 384
DE-A-32 199 47
GB-A-2 134 006
US-A-4 492 079
US-A-43 198 96

Patent Abstracts of Japan, vol.9, no.60 (M-364)(1783)
Patent Abstracts of Japan, vol.8, no.249 (M-339)(1686)

(73) Patentinhaber: ZEUNA- STÄRKER GMBH & CO KG,
Äussere Uferstrasse 61- 69 Postfach 102669,
D-8900 Augsburg 1 (DE)

(72) Erfinder: SANTIAGO, Enrique, Adalbert Stifter
Strasse 8, D-8901 Diedorf (DE)
Erfinder: KUGLAND, Peter, Dr. Wilhelm
Lohmüllerstrasse 2, D-8904 Friedberg (DE)
Erfinder: ULLMER, Alois, Wastl- Witt Strasse 44,
D-8000 München 21 (DE)

(74) Vertreter: Grättinger, Günter, Wittelsbacherstrasse
5 Postfach 16 49, D-8130 Starnberg (DE)

**Beschreibung**

Die Erfindung betrifft ein Verfahren zur automatischen Regeneration eines Rußfilters in einer Abgasleitung einer Diesel-Brennkraftmaschine (Dieselmotor) in einem Personenkraftwagen (PKW) unter Anwendung einer über eine Steuereinrichtung betätigbaren Drosselklappe in der Ansaugleitung zum Erzielen einer der Zündtemperatur des im Rußfilter gesammelten Rußes entsprechenden Abgastemperatur in Abhängigkeit von Eingangssignale für die Steuereinrichtung bildenden Meßgrößen, nämlich wenigstens Drehzahl des Dieselmotors, Gegendruck des Rußfilters und Abgastemperatur, mit folgender Systemlogik:

1. Die Drehzahl des Dieselmotors und die Abgastemperatur werden gemessen und mit vorgebenen unteren Grenzwerten verglichen, der Gegendruck vor dem Rußfilter wird gemessen und mit einem vorgebenen oberen Grenzwert verglichen.
2. Wenn alle Meßwerte über den genannten Grenzwerten liegen, erzeugt die Regeleinrichtung ein Signal "Schließen der Drosselklappe."
3. Wenn der Gegendruck vor dem Rußfilter einen unteren Grenzwert unterschreitet, erzeugt die Regeleinrichtung ein Signal "Öffnen der Drosselklappe".

Bei einem bekannten System zum Regenerieren eines Rußfilters (EP-A-0-010 384) wird eine Drosselklappe in der Ansaugluftleitung derart gesteuert, daß in bestimmten Betriebszuständen durch Schließen der Drosselklappe und damit verbundender Reduzierung der Luftzufuhr die Abgastemperatur ansteigt, mit der Folge, daß in einem in der Abgasleitung vorgesehenen Rußfilter die Zündtemperatur des dort abgelagerten Rußes erreicht wird. Durch Aufrechterhaltung dieses Zustandes während einiger Minuten gelingt es, das Rußfilter zu regenerieren, indem der dort angesammelte Ruß vollständig verbrannt wird.

Voraussetzung dabei ist, daß der Motor während des Regeneriervorgangs im oberen Teillastbereich gefahren wird, was bei einem Fahrzeugantrieb entweder eine hohe Geschwindigkeit oder Überwinden einer Steigung bedeutet. Im unteren Teillastbereich hingegen werden die zum Zünden des im Filter gesammelten Rußes erforderlichen Abgastemperaturen normalerweise nicht erreicht; um auch hier eine periodische Regeneration zu ermöglichen, sind zusätzliche Aufheizvorrichtungen vorgesehen. Bei dem bekannten System wird die Drosselklappenstellung über einen Mikrocomputer gesteuert, dessen Eingangssignale folgenden Meßgrößen entsprechen: Gaspedalstellung, Motordrehzahl, Abgastemperatur vor dem Rußfilter, Temperatur im Inneren des Rußfilters. Der Regeneriervorgang kann dabei automatisch oder von Hand initiiert werden. Durch eine variable Steuerung der Drosselklappe unter Berücksichtigung der genannten Meßgrößen soll erreicht werden, daß zum Schutz des Rußfilters die Filtertemperatur einen bestimmten Höchstwert nicht überschreitet und daß stets ein geringer Sauerstoffüberschuß im Abgas zur Unterdrückung von Rauch während des Abbrennens des im Rußfilter angesammelten Rußes vorhanden ist.

Bei einer bloß temperaturabhängigen Steuerung des Regeneriervorgangs besteht die Gefahr, daß bei Vollastbetrieb bzw., falls durch eine Schutzfunktion ausgeschlossen, bei Betriebszuständen im oberen Teillastbereich unkontrollierte Regenerationen einsetzten, die überdies von der tatsächlichen Beladung des Filters unabhängig ist. Häufige Regeneriervorgänge bedeuten aber einen höheren Brennstoffverbrauch sowie eine höhere Belastung des Rußfilters. Außerdem können sich im Schubbetrieb des Motors bei offener Drosselklappe hohe Filtertemperaturen auch bei unbeladenem Filter einstellen und dadurch unnötige und unerwünschte Regeneriervorgänge auslösen.

Aus der US-A-4 492 079 ist ein Verfahren zur Regeneration von Rußfiltern bekannt, bei welchen die in der Ansaugleitung des Motors angeordnete Drosselklappe in Abhängigkeit von dem Druckverlust in dem Rußfilter und dem Abgasdurchsatz gesteuert wird. Der Abgasdurchsatz wird dabei beispielsweise über den Gegendruck vor einem dem Rußfilter nachgeordneten Schalldämpfer ermittelt.

Alternativ zu dem Druckverlust in dem Rußfilter kann auch der Absolutdruck vor diesem als Maß für die Beladung des Rußfilters und somit für das Erforderlichwerden einer Regeneration verwendet werden.

Aus der US-A-4 319 896 ist ein Verfahren zur Regeneration von Rußfiltern bekannt, bei welchen eine in dem Filter angeordnete elektrische Heizeinrichtung die Regeneration des Filters auslöst, sobald der Druck und die Temperatur im Filter einen vorgegebenen Wert überschreiten und dem Motor gleichzeitig ein fettes Kraftstoff /Luft-Gemisch zugeführt wird.

Demgegenüber liegt der vorliegenden Erfindung die Aufgabe zugrunde, bei einem Verfahren der eingangs genannten Art eine kontrollierte automatische Regeneration des Rußfilters abhängig von definierten Betriebsbedingungen des PKW zu erzielen, wobei nach Beendigung eines Regenerationsvorgangs ein bestimmter Entladungszustand des Rußfilters erreicht wird.

Diese Aufgabe wird erfindungsgemäß dadurch gelöst, daß

4. die beiden Grenzwerte für den Druck mit der Drehzahl im Sinne ihrer jeweiligen Änderungen verschoben werden, daß
5. der Unterdruck in der Ansaugleitung hinter der Drosselklappe gemessen wird, und daß
6. die Drosselklappe zwischen den Stellungen "offen" und "geschlossen" beliebige Zwischenstellungen einnehmen kann, wobei eine Nachregelung der Drosselklappenstellung während des Regenerationsvorganges in der Weise erfolgt, daß bei zunehmendem PU-Wert die Drosselklappe in Richtung "offen" und entgegengesetzt für abnehmende PU-Werte verstellt wird.

Durch die Festlegung unterer Grenzwerte für die Drehzahl, den vor dem Rußfilter gemessenen Gegendruck, und die Temperatur im Abgas ist sichergestellt, daß eine Regeneration nur dann stattfindet, wenn alle zugehörigen Meßwerte über diesen Untergrenzen liegen. Was den Gegendruck betrifft, so ist für das Auslösen des Signals "Drosselklappe schließen" ein oberer Grenzdruck PGO zu überschreiten. Dadurch wird sichergestellt, daß jede Regeneration zu Ende geführt wird, d.h. erst dann beendet ist, wenn der Gegendruck PVF nicht nur die Druckobergrenze PGO, sondern auch die Untergrenze PGU wieder unterschritten hat. Dabei ist wesentlich, daß Druckschwankungen von PVF zwischen PGO und PGU keinen Einfluß auf die Fortsetzung der Regeneration haben, d.h. nicht zu einer Unterbrechung derselben führen. Wird die Regeneration unterbrochen, etwa weil ein anderer Grenzwert, z. B. die Grenzdrehzahl ng unterschritten wird, so wird nach Beendigung einer derartigen Unterbrechung die Regeneration fortgesetzt, bis der Gegendruck PVF die untere Druckgrenze PGU unterschreitet. Auf diese Weise gelingt es, einen hohen Entleerungsgrad des Rußfilters und damit einen energiesparenden Betrieb des Fahrzeugs sicherzustellen.

Wegen der Abhängigkeit des Gegendrucks von der Drehzahl wird das genannte Ziel jedoch erst dadurch vollkommen erreicht, daß die beiden Druck-Grenzwerte PGU bzw. PGO in Abhängigkeit von der Drehzahl (n) verschoben werden. Darüberhinaus sind die Druck-Grenzwerte von der individuellen konstruktiven Ausführung des Motors abhängig.

Davon ausgehend, daß die Abgastemperatur TNF nach dem Rußfilter gemessen und mit dem unteren Grenzwert TGU verglichen wird, da erstere am ehesten der Temperatur im Rußfilter entspricht, können für ein praktisches Beispiel die folgenden anhand eines Versuchs mit einem 2,4 l Dieselmotor ermittelten Grenzwerte angenommen werden:

ng = 2.000 U/min
TGU = 270°C
PGO = 150 mbar (Leerlauf
PGU = 20 mbar (Leerlauf)

Die Grenztemperatur TGU (hier 270° C) wurde dabei so eingestellt, daß, ausgehend von deren Niveau, durch das Schließen der Drosselklappe die Zündtemperatur für das Abbrennen des Rußes im Rußfilter, die etwa bei 430 bis 470°C liegt, erreicht wird. Selbstverständlich stellt sich diese Temperatur nicht im unteren Teillastbereich ein; der genannte TGU-Wert stellt aber sicher, daß die Regenerationsbedingungen auch im Stadtverkehr des PKW erreichbar sind.

Als weitere Meßgröße soll die Belastung des Dieselmotors in der Weise berücksichtigt werden, daß der Vollastbetrieb das Erzeugen des die Regeneration ermöglichenden Signals "Drosselklappe schließen" ausschließt, bzw. das entgegengesetzte Signal "Drosselklappe öffnen" erzeugt. Durch diese Maßnahme wird sichergestellt, daß im Vollastbetrieb unabhängig von den jeweiligen Druck-Temperatur- und Drehzahlwerten die Drosselklappe offen ist, um im Bedarfsfall die volle Motorleistung zur Verfügung stellen zu können.

Eine derartige Unterdrückung der Regeneration bei Vollast wird praktisch dadurch erzielt, daß ein mit der Einspritzpumpe des Dieselmotors gekoppelter Vollastschalter geschlossen wird, wodurch das Signal "Drosselklappe öffnen" erzeugt wird, welches auch bei nur kurzzeitigem Öffnen des Vollastschalters aufrechterhalten bleibt; ein Anhaltswert für ein derartiges kurzzeitiges Öffnen kann eine Zeitspanne von etwa zwei Sekunden sein. Hier geht es darum, daß der Vollastschalter mit einer entsprechend bemessenen Ausschaltverzögerung gekoppelt ist, so daß bei kurzzeitigem Öffnen des Vollastschalters, d.h. wenn der Fahrer also kurzzeitig vom Gas geht, die Drosselklappe dennoch offen bleibt, so daß während eines derartigen Vollastbetriebs eine Regeneration wirksam unterdrückt wird.

Um unkontrollierte Regenerationen, die zur Zerstörung des Rußfilters führen können, auszuschließen, ist vorgesehen, daß zum Schutz des Rußfilters vor Überhitzung die gemessene Abgastemperatur TNF oder die Temperaturdifferenz DTF = TNV-TVF, bezogen auf beiden Seiten des Rußfilters, mit einer Schutztemperatur TSF oder einer Schutz-Temperaturdifferenz DTS verglichen wird, und daß bei Überschreitung der Schutz-Temperaturwerte das Signal "Drosselklappe schließen" erzeugt wird.

Diese Schutzfunktion ist gerade für den Übergang vom Vollastbetrieb in den Schubbetrieb von Bedeutung, da der Motor in dieser Betriebsphase, d.h. bei bereits offener Drosselklappe unvermindert Luft ansaugt, was zu einer für das Rußfilter gefährlichen Sauerstoffkonzentration führen kann. Durch rechtzeitiges Schließen der Drosselklappe wird der Luft- bzw. Sauerstoffdurchsatz reduziert und ein Durchbrennen des Rußfilters verhindert.

In diesem Zusammenhang kann es zweckmäßig sein, die Temperaturüberschreitung an eine bestimmte Zeitspanne von z. B. einer Minute nach Beendigung des Vollastsignals zu binden. Die Schutzfunktion würde also nicht eintreten, wenn die Temperatur erst nach einem längeren Zeitraum ansteigt. In diesem Fall wird das Signal "Drosselklappe schließen" nur dann erzeugt, wenn auch die anderen Grenzwerte (ng, PGO) überschritten sind.

Die zeitliche Bindung an das Vollastsignal kann entfallen bei Verknüpfung der Schutzfunktion mit der Temperaturdifferenz TNF - TVF, da hier die Temperatur TVF vor dem Rußfilter den Einfluß der zuströmenden Frischluft und die Temperatur TNF nach dem Rußfilter den Belastungszustand des Filters unmittelbar berücksichtigen.

Im Rahmen der Erfindung ist vorgesehen, daß die Drosselklappe nicht nur die beiden Endstellungen, nämlich "Offen" und "Geschlossen" einnehmen kann (wobei die Drosselklappe in der geschlossenen Stellung selbstverständlich die Ansaugleitung keineswegs verschließt), sondern daß die Drosselklappe in beliebigen Zwischenstellungen eingestellt werden kann, derart, daß abhängig von der Belastung des Motors stets ein gewisser Sauerstoffüberschuß aufrechterhalten wird, als Voraussetzung dafür, daß während der Regeneration eine starke Rußentwicklung im Abgas unterbunden wird.

Im folgenden wird das erfindungsgemäße Verfahren anhand der Zeichnung erläutert. Es zeigt

Fig. 1    eine schematische Darstellung eines Dieselmotors mit Rußfilter und Steuereinrichtung;

Fig. 2    ein Flußdiagramm für die Funktion der Steuereinrichtung und

Fig. 3 .    ein vereinfacht dargestelltes Blockdiagramm für die Schaltung der Steuereinrichtung.

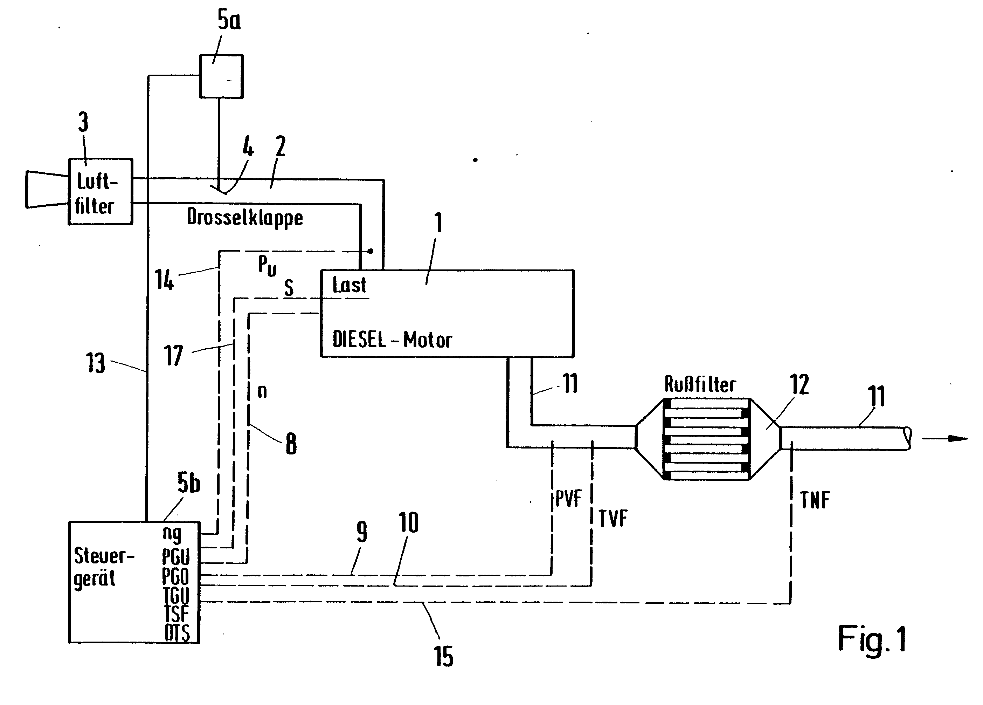

Gem. Fig. 1 ist ein Dieselmotor 1 über eine Ansaugleitung 2 mit einem Luftfilter 3 verbunden. In der Ansaugleitung 2 befindet sich eine über einen auf einen Stellmotor wirkenden Taktgeber 5a geregelte Drosselklappe 4, wobei die Regelimpulse zum Taktgeber 5a durch ein mit diesem über eine Signalleitung 13 verbundenes Steuergerät 5b erzeugt werden, welches automatisch arbeitet, da für den PKW-Fahrer eine manuelle Betätigung der Drosselklappe zwecks Regeneration des in einer Abgasleitung 11 eingeschalteten Rußfilters 12 nicht zumutbar wäre.

Das Steuergerät 5b ist eingangsseitig verbunden mit den verschiedenen Meßgrößen, nämlich einem Signaleingang 7 für die Motorlast S, z. B. analog der Gaspedalstellung oder des Hubes der Einspritzpumpe, ferner einem Signaleingang 8 für die Motordrehzahl n, einem weiteren Signaleingang 14 für den Unterdruck PU in der Ansaugleitung 2 hinter der Drosselklappe 4 und schließlich drei weiteren Signaleingängen zur Abgasleitung 11, nämlich Signaleingang 9 für den vor dem Rußfilter 12 gemessenen Druck PVF, Signaleingang 10 für die Temperatur TVF in der Abgasleitung 11 vor dem Rußfilter 12 und schließlich Signaleingang 15 für die Temperatur TNF, gemessen in der Abgasleitung 11 nach dem Rußfilter 12.

Das Steuergerät 5b reagiert auf die Eingangssignale in den Signalleitungen 7 bis 10, 14, 15 für die ermittelten Meßgrößen in der Weise, daß diese mit entsprechenden Sollwerten verglichen werden, nämlich Drehzahl n mit einer Grenzdrehzahl ng, der Druck PVF mit einem unteren Grenzdruck PGU und einem oberen Grenzdruck PGO und die Temperatur TNF mit einer unteren Grenztemperatur TGU. Erst wenn diese Messwerte über deren Grenzwerten liegen wird das Signal "Drosselklappe schließen" erzeugt und über Signalleitung 13 an den Taktgeber 5a geleitet.

In einer Variante kann der Temperaturvergleich auch aufgrund der Differenztemperaturen TNF - TVF = DTF bewirkt werden, wobei die gemessene Temperaturdifferenz DTF verglichen wird mit einem entsprechenden Sollwert DTG.

Das Lastsignal S wird in der Weise berücksichtigt, daß bei Vollast das Signal "Drosselklappe schließen" ausgeschlossen ist. Die Grenzdrehzahl ng liegt etwa bei 2000 Umdrehungen pro Minute, also im mittleren Teillastbereich.

Der gemessene Gegendruck PVF muß als Voraussetzung für das Signal "Drosselklappe schließen" über dem oberen Grenzwert PGO liegen, wobei nach dem Schließen der Drosselklappe 4 ein Absinken des Drucks unteren den oberen Grenzwert PGO zu keiner Unterbrechung der Regeneration führt, so lange

$$PVF > PGU$$

Eine Sonderstellung nimmt die Signalleitung 14 für den Unterdruck PU in der Ansaugleitung 2 ein. Dieses Signal wird für die Nachregelung der Drosselklappe 4 durch den Taktgeber 5 a benötigt, so daß die Drosselklappe aufgrund von Veränderungen des PU-Signals nicht nur zwischen "offen" und "geschlossen" verstellt werden kann sondern beliebige Zwischenstellungen einnehmen kann, derart, daß bei zunehmendem PU-Wert die Drosselklappe in Richtung "offen" und entgegengesetzt für abnehmende PU-Werte verstellt wird. Ziel dieser Nachregelung der Drosselklappe ist die Erhaltung eines geringen Sauerstoffüberschusses in Anpassung an die jeweilige Motorlast. Als (nicht gezeichnete) Alternative käme hier auch eine Sauerstoffsonde ergänzend oder anstelle der PU-Messung in Frage.

Für den Temperaturvergleich ist es ausreichend, wenn die Temperatur TNF nach dem Rußfilter gemessen und mit einer Grenztemperatur TGU verglichen wird. Um das Rußfilter vor Überhitzen zu schützen, erscheint es zweckmäßig, die nach Auftreten eines vorangegangenen Vollastsignals nach dem Rußfilter gemessene Temperatur TNF mit einer Schutztemperatur TSF für das Rußfilter 12 zu vergleichen. Die Phase beim Übergang von Vollastbetrieb in den Schubbetrieb bedeutet für das Rußfilter eine besondere Gefahr, da bei noch heißem Filter die Drosselklappe in der "Offen"-Stellung steht, so daß der Motor unvermindert Luft ansaugen kann, was zu einem gefährlichen Sauerstoffüberschuß im Rußfilter führen kann.

An die Stelle der Verknüpfung des Temperaturvergleichs

$$TNF > TSF,$$

gemessen etwa innerhalb einer Minute nach Ende des letzten Vollastsignals kann auch die Messung der Temperaturdifferenz TNF - TVF = DTF treten, wobei DTF verglichen wird mit dem Sollwert einer Schutz-Temperaturdifferenz DTS, nach der Beziehung DTF > DTS.

Für diesen Vergleich von Differenztemperaturen kann eine Zeitabhängigkeit entfallen, da der Temperaturverlauf TNF analog zur Temperatur im Rußfilter und der Temperaturverlauf TVF analog der jeweiligen Drosselklappenstellung ist.

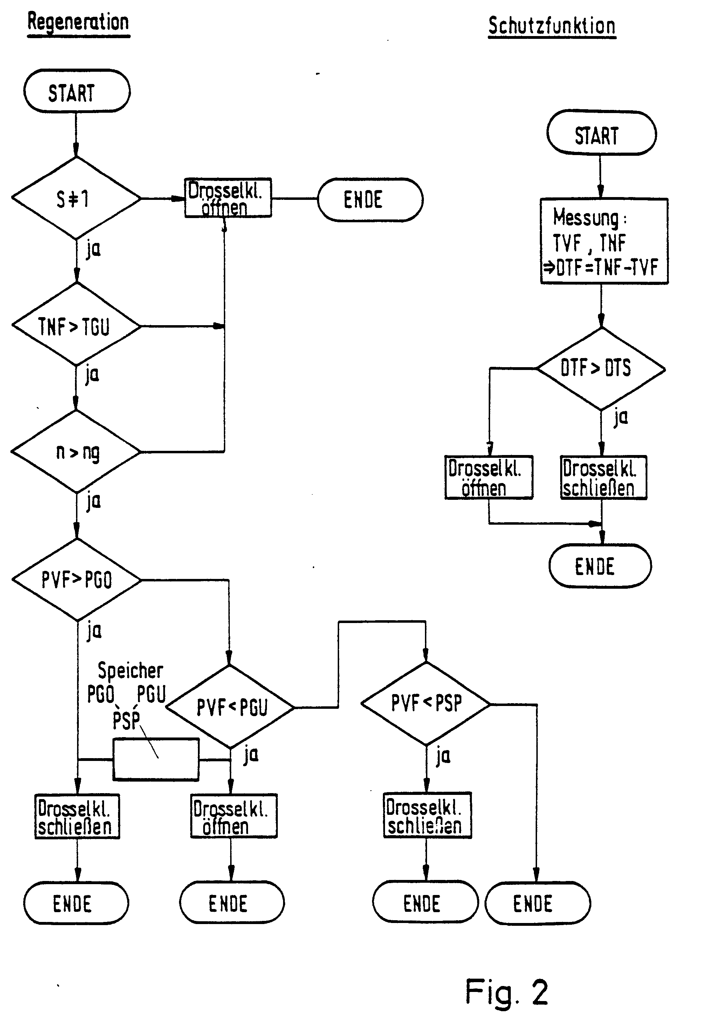

Das in Fig. 2 dargestellte Flußdiagramm erläutert die Funktionsweise des Steuergeräts 5b. Dieses Flußdiagramm ist für den Fachmann aus sich heraus verständlich.

Es zeigt zwei Abläufe nämlich "Regeneration" und "Schutzfunktion", wobei letztere aufbaut auf dem oben beschriebenen Vergleich der Temperaturdifferenzen, mit Messwerten vor und hinter dem Rußfilter.

Zum Regenerationsablauf sei noch ergänzt, daß sich, Teilast (S ≠ 1) an den 3-stufigen Grenzwertvergleich TNF > TGU; n > ng und PVF > PGO unmittelbar, nämlich falls alle Messwerte über den jeweiligen Grenzwerten liegen, das Signal "Drosselklappe schließen" ergibt. Für den Druckvergleich entspricht der eingespeicherte Sollwert entweder dem unteren Grenzwert PGU oder dem oberen Grenzwert PGO. Der Sollwert kann dabei entweder digital oder nach Maßgabe eines Hysteresegliedes eingestellt werden.

Sinkt der Druck unter PGO, während alle anderen Meßwerte über den jeweiligen Grenzwerten liegen, so wird die Regeneration dennoch fortgesetzt, so lange für den Gegendruck des Rußfilters PVF die Beziehung

$$PVF > PGU$$

gilt. Nach eingeleiteter Regeneration wird also der eingespeicherte Sollwert für den Druck geändert, wobei PGO durch PGU ausgetauscht wird. Sinkt später der Gegendruck unter PGU, so wird der eingespeicherte Sollwert wieder auf PGO geändert. Erst wenn PGO wieder überschritten wird, kann ein neuer Regenerationszyklus beginnen.

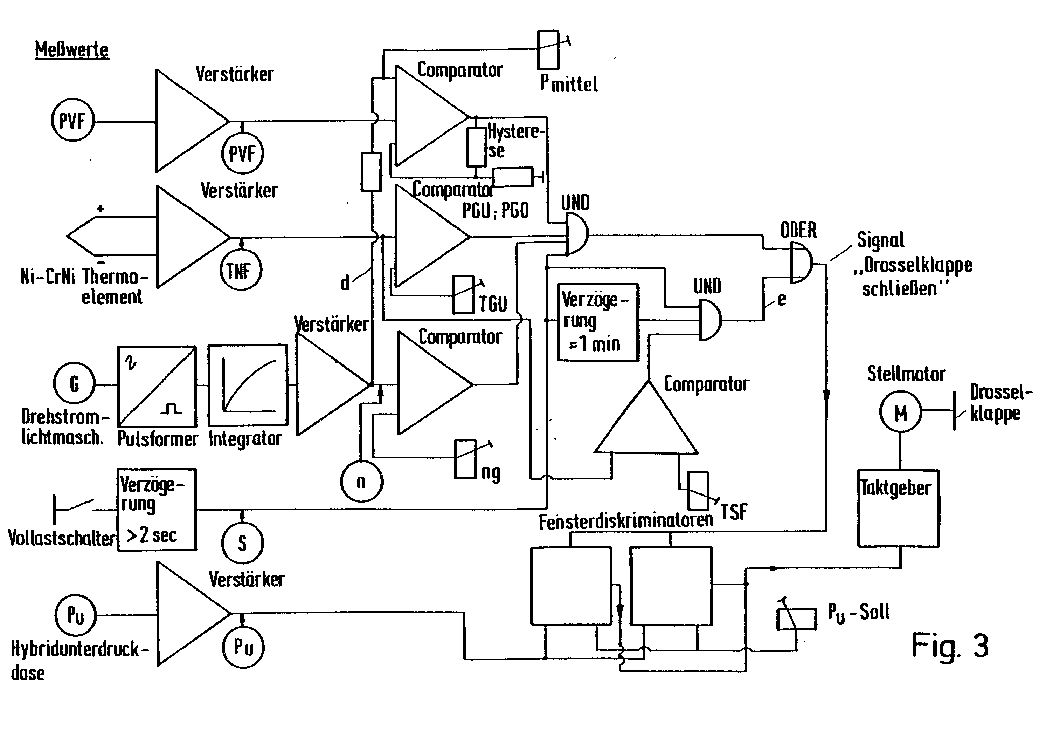

Das Blockdiagramm gem. Fig. 3 zeigt von links nach rechts zunächst die Meßwerterfassung, die Verstärkung des Meßsignals, dessen Vergleich mit den eingespeicherten Grenzwerten und schließlich die Ermittlung des Steuersignals "Drosselklappe schließen" durch ein UND-Glied und ein nachgeschaltetes ODER-Glied dessen zweiter Eingang e der durch Temperaturvergleich ermittelten Schutzfunktion entspricht. Zur Bezeichnung der Grenzwerte wurden die selben Bezeichnungen wie in Figur 2 verwendet, außerdem wurden die einzelnen Schaltungsteile mit Erklärungen versehen, so daß die in Fig. 3 vereinfacht dargestellte Schaltung des Steuergeräts aus sich heraus verständlich ist.

Lediglich zur Unterdruckmessung sein ergänzt, daß das Signal "Drosselklappe schließen", bevor es an den Taktgeber für den Stellmotor M zur Verstellung der Drosselklappe gelangt, noch über zwei Fensterdiskriminatoren geregelt wird, die jeweils einen Eingang für das Unterdrucksignal PU und einen zweiten Eingang für den Sollwert des Unterdrucks PU-Soll aufweisen. Durch die beiden Fensterdiskriminatoren wird ein schnelles Regelverhalten dadurch erreicht, daß bei großer PU-Istwertabweichung die Drosselklappe mit hoher Geschwindigkeit betätigt wird während bei geringer PU-Istwertabweichung eine kleinere Verstellgeschwindigkeit zur Anwendung kommt, wobei die beiden Geschwindigkeiten durch die beiden Fensterdiskriminatoren ermittelt werden.

Besonders hingewiesen sei noch auf die Verschiebung der beiden Druckgrenzwerte PGU, PGO, nach Maßgabe der Drehzahl n; zu diesem Zweck wird das Drehzahlsignal in der Signalleitung d zum Comparator für den Druckvergleich abgezweigt, mit einem Sollwert P mittel verknüpft, über eine Hysterese-Schaltung geregelt und schließlich mit dem Meßwert verglichen.

Der in Fig. 2 eingeführte Speicherwert PSP entspricht jeweils einem der beiden Grenzwerte PGU, PGO der Hysterese-Schaltung. Diese Grenzwerte stehen dabei in einer bestimmten, festen Abhängigkeit zu P mittel.

**Patentansprüche**

1. Verfahren zur automatischen Regeneration eines Rußfilters in einer Abgasleitung (11) einer Dieselbrennkraftmaschine (Dieselmotor) in einem Personenkraftwagen (PKW) unter Anwendung einer über eine Steuereinrichtung betätigbaren Drosselklappe (4) in der Ansaugleitung (2) zum Erzielen einer der Zündtemperatur des im Rußfilter (12) gesammelten Rußes entsprechenden Abgastemperatur in Abhängigkeit von Eingangssignale für die Steuereinrichtung bildenden Meßgrößen, nämlich wenigsten Drehzahl des Dieselmotors, Gegendruck des Rußfilters und Abgastemperatur, mit folgender Systemlogik:

1.1. Die Drehzahl (n) des Dieselmotors (1) und die Abgastemperatur werden gemessen und mit vorgegebenen unteren Grenzwerten (ng, TGU) verglichen, der Gegendruck (PVF), vor dem Rußfilter (12) wird gemessen und mit einem vorgegebenen oberen Grenzwert (PGO) verglichen.

1.2. Wenn alle Meßwerte über den genannten Grenzwerten liegen, erzeugt die Regeleinrichtung ein Signal "Schließen der Drosselklappe".

1.3. Wenn der Gegendruck (PVF), gemessen vor dem Rußfilter (12), einen unteren Grenzwert (PGU) unterschreitet, erzeugt die Regeleinrichtung ein Signal "Öffnen der Drosselklappe", dadurch gekennzeichnet, daß

1.4. die beiden Grenzwerte für den Druck (PGU bzw. PGO) mit der Drehzahl (n) im Sinne ihrer jeweiligen Änderung verschoben werden, daß 1.5. der Unterdruck (PU) in der Ansaugleitung hinter der Drosselklappe gemessen wird, und daß

1.6. die Drosselklappe zwischen den Stellungen "offen" und "geschlossen" beliebige Zwischenstellungen einnehmen kann, wobei eine Nachregelung der Drosselklappenstellung während des Regenerationsvorganges in der Weise erfolgt, daß bei zunehmendem PU-Wert die Drosselklappe in Richtung "offen" und entgegengesetzt für abnehmende PU-Werte verstellt wird.

2. Verfahren nach Anspruch 1,
dadurch gekennzeichnet,
daß die Geschwindigkeit der Drosselklappenregelung abhängig ist von der Größe der Abweichung des Unterdrucks (PU) von einem von der Steuereinrichtung vorgegebenen Sollwert (PU-SOLL), wobei hohe Istwertabweichungen zu einer hohen Regelgeschwindigkeit, niedrige Istwertabweichungen zu einer niedrigen Regelgeschwindigkeit für die Drosselklappensteuerung führen.

3. Verfahren nach Anspruch 1 oder 2,
dadurch gekennzeichnet,
daß die Größe des vorgegebenen Sollwertes (PU-SOLL) selbst variabel ist und von der Belastung des Dieselmotors abhängt, wobei die Belastung des Dieselmotors in bekannter Weise ermittelt wird.

4. Verfahren nach Anspruch 3,
dadurch gekennzeichnet,
daß die drei Belastungsfälle unterschieden werden:
a) PU-SOLL = x für Konstantfahrt
b) PU-SOLL = x + y für Verzögerung (Bremsen)
c) PU-SOLL = x - y für starke Beschleunigung,
wobei x zwischen 250 und 450 mbar liegt und
wobei y zwischen 50 und 150 mbar liegt.

5. Verfahren nach einem der vorausgehenden Ansprüche,
dadurch gekennzeichnet,
daß als weitere Meßgröße die Belastung des Dieselmotors (1) berücksichtigt wird derart, daß der Vollastbetrieb das Erzeugen des die Regeneration ermöglichenden Signals "Schließen der Drosselklappe" ausschließt bzw. das entgegengesetzte Signal "Öffnen der Drosselklappe" erzeugt.

6. Verfahren nach Anspruch 5,
dadurch gekennzeichnet,
daß zur Unterdrückung der Regeneration bei Vollast ein mit der Einspritzpumpe des Dieselmotors (1) gekoppelter Vollastschalter geschlossen wird, wodurch das Signal "Öffnen der Drosselklappe" erzeugt wird, welches auch bei nur kurzzeitigen Öffnen des Vollastschalters aufrechterhalten bleibt.

7. Verfahren nach einem der vorausgehenden Ansprüche,
dadurch gekennzeichnet,
daß zusätzlich die Abgastemperatur (TNF) nach dem Rußfilter (12) gemessen wird und daß zum Schutz des Rußfilters vor Überhitzung die gemessene Abgastemperatur (TNF) mit einer Schutztemperatur (TSF) oder daß die Temperaturdifferenz (DTF = TNF - TVF), bezogen auf beide Seiten des Rußfilters, mit einer Schutz-Temperaturdifferenz (DTS) verglichen wird und daß bei Überschreitung der Schutztemperaturwerte das Signal "Schließen der Drosselklappe" erzeugt

.wird.

**Revendications**

1. Procédé pour la régénération automatique d'un filtre à suie dans une conduite d'échappement (11) d'une machine à combustion interne diesel (moteur diesel) d'une voiture de tourisme (PKW), lequel utilise un clapet d'étranglement (4) qui peut être actionné par un dispositif de commande et qui est monté sur la conduite d'admission (2) pour atteindre une température des gaz d'échappement correspondant à la température d'allumage de la suie accumulée dans le filtre à suie (12), en fonction de signaux d'entrée pour des valeurs mesurées constituant le dispositif de commande, à savoir au moins la vitesse de rotation du moteur diesel, la contre-pression du filtre à suie et la température des gaz d'échappement, avec la systématique suivante:

1.1. On mesure la vitesse de rotation (n) du moteur diesel (1) et la température des gaz d'échappement, et on les compare à des valeurs limites inférieures prédéterminées (ng, TGU), on mesure la contre-pression (PVF) avant le filtre à suie (12) et on la compare à une valeur limite supérieure prédéterminée (PGO).

1.2. Lorsque toutes les valeurs mesurées sont au-dessus desdites valeurs limites, le dispositif de régulation engendre un signal "fermer le clapet d'étranglement".

1.3. Lorsque la contre-pression (PVF), mesurée avant le filtre à suie (12), dépasse vers le bas une valeur limite inférieure (PGU), le dispositif de régulation engendre un signal "ouvrir le clapet d'étranglement",
caractérisé par le fait que:

1.4. Les deux valeurs limites de la pression (PGU et, respectivement, PGO) sont déplacées en fonction de la vitesse de rotation (n) dans le sens de leur modification correspondante, par le fait que:

1.5. La dépression (PU) qui règne dans la conduite d'admission est mesurée derrière le clapet d'étranglement, et par le fait que:

1.6. Le clapet d'étranglement peut prendre des positions intermédiaires quelconques entre les positions "ouvert" et "fermé", un réajustage de la position du clapet d'étranglement ayant lieu pendant le processus de régénération de telle sorte que le clapet d'étranglement soit déplacé dans la direction "ouvert" lorsque les valeurs de PU augmentent, et inversement pour les valeurs décroissantes de PU.

2. Procédé selon la revendication 1, caractérisé par le fait que la vitesse de régulation du clapet d'étranglement dépend de la valeur de l'écart de la dépression (PU) par rapport à une valeur de consigne (PU-SOLL) prédéterminée par le dispositif de commande, des écarts élevés de la valeur mesurée conduisant à une vitesse de régulation élevée de la commande du clapet d'étranglement, et des écarts faibles de la valeur mesurée conduisant à une faible vitesse de régulation de la commande du clapet d'étranglement.

3. Procédé selon la revendication 1 ou 2, caractérisé par le fait que le niveau de la valeur de consigne prédéterminée (PU-SOLL) est lui-même variable, et qu'il dépend de la charge du moteur diesel, la charge du moteur diesel étant obtenue de manière connue.

4. Procédé selon la revendication 3, caractérisé par le fait que l'on distingue les trois cas de charge suivants:

a) PU-SOLL = x pour une allure constante

b) PU-SOLL = x + y pour un ralentissement (freinage)

c) PU-SOLL = x - y pour une forte accélération, x étant compris entre 250 et 450 mbar et y étant compris entre 50 et 150 mbar.

5. Procédé selon l'une des revendications précédentes, caractérisé par le fait que, comme autre valeur mesurée, on prend en considération la charge du moteur diesel (1) de telle sorte que le fonctionnement à pleine charge exclue la production du signal "fermer le clapet d'étranglement" qui permet la régénération ou, inversement, engendre le signal opposé "ouvrir le clapet d'étranglement".

6. Procédé selon la revendication 5, caractérisé par le fait que, pour supprimer la régénération en pleine charge, un commutateur de pleine charge accouplé à la pompe d'injection du moteur diesel (1) se ferme, grâce à quoi est engendré le signal "ouvrir le clapet d'étranglement" qui reste maintenu même lorsque l'ouverture du commutateur de pleine charge n'est que de courte durée.

7. Procédé selon l'une des revendications précédentes, caractérisé par le fait que l'on mesure en outre la température des gaz d'échappement (TNF) après le filtre à suie (12), et par le fait que, pour protéger le filtre à suie de la surchauffe, on compare la température mesurée des gaz d'échappement (TNF) à une température de protection (TSF), ou que l'on compare la température différentielle (DTF = TNF - TVF), rapportée aux deux côtés du filtre à suie, à une température différentielle de protection (DTS), et que le signal "fermer le clapet d'étranglement" est engendré lorsque les valeurs des températures de protection sont dépassées vers le haut.

**Claims**

1. Method for the automatic regeneration of a soot filter in an exhaust gas pipe (11) of a diesel internal combustion engine (diesel engine) in a motor vehicle using a butterfly valve (4) in the intake manifold (2), which valve can be actuated by way of a control device, for achieving an exhaust gas temperature corresponding to the ignition temperature of the soot collected in the soot filter (12), depending on input signals for measured quantities forming the control device, namely at least the speed of the diesel engine, counter pressure of the soot filter and exhaust gas temperature, with the following logic system:

1.1 The speed (n) of the diesel engine (1) and the exhaust gas temperature are measured and compared with specific lower limit values (ng, TGU), the counter pressure (PVF) before the soot filter (12) is measured and compared with a specific upper limit value (PGO).

1.2 If all the measurement values are above the said limit values, the regulation device produces a signal "close the butterfly valve".

1.3 If the counter pressure (PVF), measured before the soot filter (12), falls below a lower limit value (PGU), the regulation device produces a signal "open the butterfly valve", characterised in that

1.4 The two limit values for the pressure (PGU respectively PGO) are offset with the speed (n) in the direction of their respective variation, that

1.5 the reduced pressure (PU) in the intake manifold is measured behind the butterfly valve and that

1.6 the butterfly valve may assume any intermediate positions between the "open" and "closed" positions, a subsequent regulation of the butterfly valve position during the regeneration operation taking place in such a way that with an increasing PU-value the butterfly valve is moved in the "open" direction and in the opposite direction for decreasing PU-values.

2. Method according to claim 1, characterised in that the speed of the butterfly valve regulation is dependent on the amount of the deviation of the reduced pressure (PU) from a reference value (PU-REF) determined by the control device, high actual value deviations leading to a high regulation speed, low actual value deviations leading to a low regulation speed for the butterfly valve control.

3. Method according to Claim 1 or 2, characterised in that the amount of the specific reference value (PU-REF) itself is variable and depends on the load on the diesel engine, the load on the diesel engine being determined in known manner.

4. Method according to Claim 3, characterised in that the three load cases are different:

a) PU-REF = x for constant travel

b) PU-REF = x + y for deceleration (braking)

c) PU-REF = x - y for high deceleration, x being between 250 and 450 mbars and y being between 50 and 150 mbars.

5. Method according to one of the preceding Claims, characterised in that as a further measurement quantity the load on the diesel engine (1) is taken into consideration such that full load operation precludes the production of the signal "close the butterfly valve" facilitating regeneration or produces the opposite signal "open the butterfly valve".

6. Method according to Claim 5, characterised in that to suppress regeneration in the case of full load, a full load switch connected to the injection pump of the diesel engine (1) is closed, due to which the signal "open the butterfly valve" is produced, which is maintained even with only brief opening of the full load switch.

7. Method according to one of the preceding Claims, characterised in that by way of addition the exhaust gas temperature (TNF) after the soot filter (12) is measured and that for protecting the soot filter from overheating, the measured exhaust gas temperature (TNF) is compared with a protection temperature (TSF) or that the temperature difference (DTF = TNF - TVF), with respect to both sides of the soot filter, is compared with a protection temperature difference (DTS) and that if the protection temperature values are exceeded, the signal "close the butterfly valve" is produced.

Fig. 1

EP 0 211 877 B1

**Regeneration**

**Schutzfunktion**

START

S ≠ 1 → Drosselkl. öffnen → ENDE

ja

TNF > TGU

ja

n > ng

ja

PVF > PGO

ja

Speicher
PGO  PGU
PSP

PVF < PGU

ja

PVF < PSP

ja

Drosselkl. schließen → ENDE

Drosselkl. öffnen → ENDE

Drosselkl. schließen → ENDE

ENDE

START

Messung:
TVF , TNF
⇒DTF=TNF−TVF

DTF > DTS

ja

Drosselkl. öffnen

Drosselkl. schließen

ENDE

# Fig. 2

EP 0 211 877 B1

Meßwerte

Verstärker

PVF

PVF

Verstärker

Ni-CrNi Thermo-element

TNF

Verstärker

G

Drehstrom-lichtmasch.

Pulsformer

Integrator

n

Verzöge-rung >2 sec

Vollastschalter

S

Verstärker

Pu

Hybridunterdruck-dose

Pu

Comparator

Pmittel

Hystere-se

Comparator PGU; PGO

UND

d

TGU

Verzöge-rung ≈1 min

UND

Comparator

ng

ODER

Signal „Drosselklappe schließen"

e

Stellmotor

M

Drossel-klappe

Comparator

Fensterdiskriminatoren

TSF

Taktgeber

Pu-Soll

Fig. 3